# EUROPÄISCHE PATENTSCHRIFT

(11) **EP 0 961 957 B1**
(45) Veröffentlichungstag und Bekanntmachung des Hinweises auf die Patenterteilung: **02.07.2003**
(21) Anmeldenummer: 98965085.8
(22) Anmeldetag: 19.11.1998
(51) Int. Cl.: G05B 23/02, F02D 41/22, F02D 41/38

(54) **VERFAHREN UND VORRICHTUNG ZUR FUNKTIONSÜBERWACHUNG EINES DRUCKREGLERS**
METHOD AND DEVICE FOR MONITORING THE OPERATION OF A PRESSURE REGULATOR
PROCEDE ET DISPOSITIF POUR LA SURVEILLANCE DU FONCTIONNEMENT D'UN REGULATEUR DE PRESSION

(30) Priorität: 23.12.1997 DE 19757594
(43) Veröffentlichungstag der Anmeldung: 08.12.1999
(73) Patentinhaber: SIEMENS AKTIENGESELLSCHAFT, 80333 München (DE)
(72) Erfinder: HARTKE, Andreas, D-93049 Regensburg (DE); SCHÖPPE, Detlev, D-93173 Wenzenbach (DE)
(86) Internationale Anmeldenummer: DE9803426
(87) Internationale Veröffentlichungsnummer: WO99034268

(56) Entgegenhaltungen:
- EP-A- 0 501 459
- EP-A- 0 681 100
- DE-A- 4 401 806
- DE-A- 19 547 647
- DE-A- 19 548 279
- DE-A- 19 622 757
- US-A- 5 241 933

## Beschreibung

Die Erfindung betrifft ein Verfahren und eine Vorrichtung zur Funktionsüberwachung eines Druckreglers, der den Druck in einem Druckspeicher, insbesondere einem Hochdruckspeicher für ein Kraftstoffversorgungssystem, regelt.

Hochdruckspeicher werden in Kraftstoffversorgungssystemen vor allem bei Einspritzsystemen für Verbrennungsmotoren eingesetzt, bei denen mit sehr hohen Einspritzdrücken gearbeitet wird. Solche Einspritzsysteme sind bei Dieselmotoren unter der Bezeichnung Common-Rail-Systeme und bei Ottomotoren unter der Bezeichnung High-Pressure-Direct-Injection (HPDI)-Systeme bekannt. Bei diesen Einspritzsystemen wird mittels einer Hochdruckpumpe Kraftstoff aus einem Kraftstoffvorratsbehälter in den Druckspeicher gefördert, über den der Kraftstoff an Einspritzventilen, die in den Zylinderköpfen des Motors angeordnet sind, ansteht. Die Einspritzvorgänge werden durch ein Bestromen der Einspritzventile ausgelöst, wobei das Einspritzvolumen abhängig von dem an den Einspritzventilen anstehenden Druck und der Dauer der Bestromung ist.

Um den Druck im Druckspeicher, der den Einspritzdruck bestimmt, präzise und schnell an den jeweiligen Betriebszustand des Verbrennungsmotors anpassen zu können, ist der Druckspeicher mit einem Druckregler versehen. Eine Funktionsstörung dieses Druckreglers, z.B. ein Klemmen des Stellglieds in diesem Druckregler, hat deshalb auch schwerwiegende Auswirkungen auf den Betrieb des Verbrennungsmotors und kann insbesondere zu einer erhöhten Schadstoffemission aufgrund unvollständiger Verbrennungsvorgänge in den Zylindern führen.

Im Stand der Technik ist bisher nur bekannt, den Kraftstoffdruck im Druckspeicher selbst zu überwachen, um so einen Druckabfall feststellen zu können. Ein solcher Druckabfall muß jedoch nicht ursächlich durch eine Funktionsstörung im Druckregler bedingt sein, sondern kann z.B. auch durch einen Bruch in den Kraftstoffleitungen hervorgerufen werden. Eine spezifische Funktionsdiagnose des Druckreglers und damit die Möglichkeit einer Einleitung von Gegenmaßnahmen beim Feststellen von Funktionsstörungen ist somit nicht möglich. Weiterhin ist im Stand der Technik auch bekannt, das Ansteuersignal des Druckreglers zu überwachen und hierbei einen Leitungsbruch oder einen Kurzschluß festzustellen. Diese Überwachung ermöglicht es jedoch nicht, Aussagen über die mechanische Funktionsfähigkeit des Druckreglers zu treffen.

Aufgabe der Erfindung ist es deshalb, ein Verfahren und eine Vorrichtung zur Funktionsüberwachung eines Druckreglers, der den Druck in einem Druckspeicher regelt, bereitzustellen, die auf einfache und zuverlässige Weise die mechanische Funktionsfähigkeit des Druckreglers überprüfen.

Diese Aufgabe wird durch ein Verfahren gemäß Anspruch 1 und eine Vorrichtung gemäß Anspruch 7 gelöst. Gemäß der Erfindung werden eine periodische Änderung im Förderstrom zum Druckspeicher und die daraus resultierende Änderung der Stellgröße des Druckreglers, um den Druck im Druckspeicher konstant zu halten, korreliert und auf der Grundlage des festgestellten Zusammenhangs eine Funktionsdiagnose des Druckreglers vorgenommen. Das erfindungsgemäße Verfahren ermöglicht eine zuverlässige Fehlerdiagnose des Druckreglers mit einem geringen Datenverarbeitungsaufwand. Weiterhin werden zur Funktionsdiagnose über die bereits bei den bekannten Einspritzsystemen erfaßten Meßdaten hinaus keine zusätzlichen Daten benötigt. Die erfindungsgemäße Vorrichtung zeichnet sich weiterhin durch einen geringen Schaltungsaufwand aus, der sich einfach in die herkömmliche Motorsteuerung integrieren läßt.

Bevorzugte Ausführungsformen der Erfindungen sind in den abhängigen Ansprüchen angegeben.

Die Erfindung wird anhand der Figuren näher erläutert.

Es zeigen
**Figur 1** eine schematische Anordnung eines Kraftstoffeinspritzsystems;
**Figur 2** eine schematische Darstellung eines Druckregelventils;
**Figur 3** Kennlinien eines Druckregelventils für unterschiedliche Drehzahlen der Brennkraftmaschine;
**Figur 4** eine schematische Darstellung einer erfindungsgemäßen Vorrichtung zur Funktionsüberwachung eines Druckreglers;
**Figur 5** Kennlinien des erfindungsgemäßen Verfahrens zur Funktionsüberwachung eines Druckreglers, die sich bei einem voll funktionsfähigen Druckregler ergeben; und
**Figur 6** Kennlinien eines erfindungsgemäßen Verfahrens zur Funktionsüberwachung eines Druckreglers, die sich bei einem funktionsgestörten Druckregler ergeben.

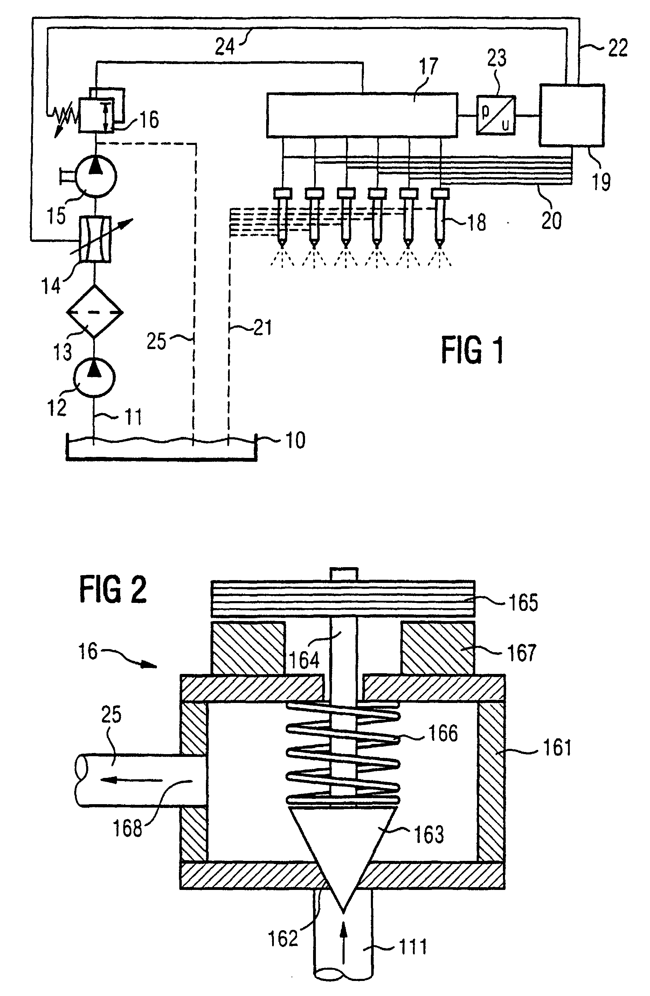

Figur 1 zeigt schematisch den Aufbau eines Kraftstoffeinspritzsystems, wie er in Common-Rail-Systemen eingesetzt wird. Bei diesen Einspritzsystemen wird Kraftstoff aus einem Vorratsbehälter 10 über eine Kraftstoffleitung 11 durch eine Vorförderpumpe 12 angesaugt. Die Vorförderpumpe 11 fördert den Kraftstoff über ein Kraftstoffilter 13 zu eine Hochdruckpumpe 15. Die Hochdruckpumpe 15 verdichtet den Kraftstoff und speist ihn unter hohem Druck in den Druckspeicher 17 ein. Der Druckspeicher 17 steht mit Einspritzventilen 18 in Verbindung, über die der Kraftstoff in die Zylinder der Brennkraftmaschine (nicht gezeigt) eingespritzt wird. Der Einspritzvorgang wird durch eine elektronische Steuereinheit 19 ausgelöst, die über Signalleitungen 20 mit den Einspritzventilen 18 verbunden ist. Der in den Einspritzventilen 18 auftretende Leckagestrom wird über Kraftstoffleitungen 21 in den Kraftstoffvorratsbehälter 10 zurückgeführt.

Um den Volumenstrom der Hochdruckpumpe 15 entsprechend den jeweiligen Betriebsbedingungen der Brennkraftmaschine bedarfsabhängig einstellen zu können, ist bei der in Figur 1 gezeigten Ausführungsform in der Kraftstoffleitung 11 zwischen der Vorförderpumpe 12 und der Hochdruckpumpe 15 ein zusätzliches Saugdrosselventil 14 angeordnet, mit dessen Hilfe der Förderstrom der Hochdruckpumpe geregelt werden kann. Dieses Saugdrosselventil 14 wird entsprechend den jeweiligen Betriebsbedingungen der Brennkraftmaschine von der Steuereinheit 19 über eine Steuerleitung 22 angesteuert. Alternativ kann der Förderstrom der Hochdruckpumpe 15 jedoch auch über ein variables Übersetzungsgetriebe für den Antrieb der Hochdruckpumpe oder durch eine druck- oder/und drehzahl-geregelte Auslegung der Vorförderpumpe 12 beeinflußt werden.

Um den Druck im Druckspeicher 17 entsprechend den gewünschten Betriebsbedingungen der Brennkraftmaschine einstellen zu können, ist weiterhin zwischen die Hochdruckpumpe 15 und den Druckspeicher 17 ein Druckregelventil 16 in die Kraftstoffleitung 11 geschaltet. Dieses Druckregelventil 16 steuert über die Kraftstoffleitung 25 überschüssigen Kraftstoff, der nicht zur Aufrechterhaltung des gewünschten Drucks im Druckspeicher benötigt wird, in den Vorratsbehälter 10 ab. Das Druckregelventil 16 wird dabei von der Steuereinheit 19 über eine Steuerleitung 24 entsprechend einem Druck, der von einem am Druckspeicher 17 angebrachten Drucksensor 23 gemessen wird, eingestellt.

Figur 2 zeigt schematisch ein Druckregelventil 16, wie es herkömmlicherweise in einem Einspritzsystem gemäß Figur 1 verwendet wird. Dieses Druckregelventil weist ein Ventilgehäuse 161 auf, in das eine Einlaßöffnung 162 eingelassen ist, die über eine Kraftstoffleitung 111 mit dem Druckspeicher 17 in Verbindung steht. Im Ventilgehäuse 161 ist weiterhin eine Auslaßöffnung 168 vorgesehen, die an die Kraftstoffleitung 25 angeschlossen ist. Die Einlaßöffnung 162 weist einen sich kegelförmig nach innen öffnenden Dichtsitz auf, in den ein ebenfalls kegelförmig ausgebildeter Ventilkörper 163 eingreift. Dieser Ventilkörper 163 sitzt mit seiner Grundfläche auf einem ersten Ende einer Schließstange 164, die mit ihrem anderen Ende durch eine Bohrung aus dem Ventilgehäuse 161 herausragt. Zwischen dem Ventilgehäuse 161 und der Grundfläche des Ventilkörpers 163 ist weiterhin um die Schließstange 164 herum eine Ventilfeder 166 angeordnet, die den Ventilkörper mit einer Federvorspannung belegt. An dem aus dem Ventilgehäuse 161 herausragenden Ende der Schließstange 164 sitzt ein Anker 165, wobei sich zwischen diesem Anker und dem Ventilgehäuse 161 außerdem eine stromführende Spule 167 befindet.

Das in Figur 2 gezeigte Druckregelventil 16 arbeitet wie folgt: In Schließrichtung wirkt auf den Ventilkörper 163 die Summe aus der von der Feder 166 beaufschlagten Federkraft und der von der stromführenden Spule 167 erzeugten Ankerkraft. In Öffnungsrichtung dagegen greift am Ventilkörper 167 der im Druckspeicher 17 herrschenden Kraftstoffdruck an. Überschreitet die aus dem Kraftstoffdruck im Druckspeicher resultierende Druckkraft auf den Ventilkörper 163 die entgegenwirkende Haltekraft von Feder und Anker, so hebt der Ventilkörper vom Dichtsitz in der Einlaßöffnung 162 ab und steuert den überschüssigen Kraftstoff aus dem Druckspeicher über die Kraftstoffleitung 25 zurück in den Kraftstoffvorratsbehälter 10. Durch Verändern des Spulenstroms kann die Ankerkraft und damit die der Druckkraft entgegenwirkende Haltekraft auf den Ventilkörper 163 eingestellt werden. Der freie Strömungsquerschnitt durch die Einlaßöffnung 162 des Druckregelventils ergibt sich aus dem abzuführenden Kraftstoff und dem im Druckspeicher 17 herrschenden Druck. Der abzuführende Kraftstoff stellt dabei die Differenz zwischen dem von der Hochdruckpumpe 15 in den Druckspeicher 17 geförderten Kraftstoffstrom und dem vom Druckspeicher im Zuge der Kraftstoffeinspritzung und der Leckage der Einspritzventile abgegebenen Kraftstoff dar. Dieser abzuführende Kraftstoff ist deshalb auch von der Drehzahl der Brennkraftmaschine abhängig.

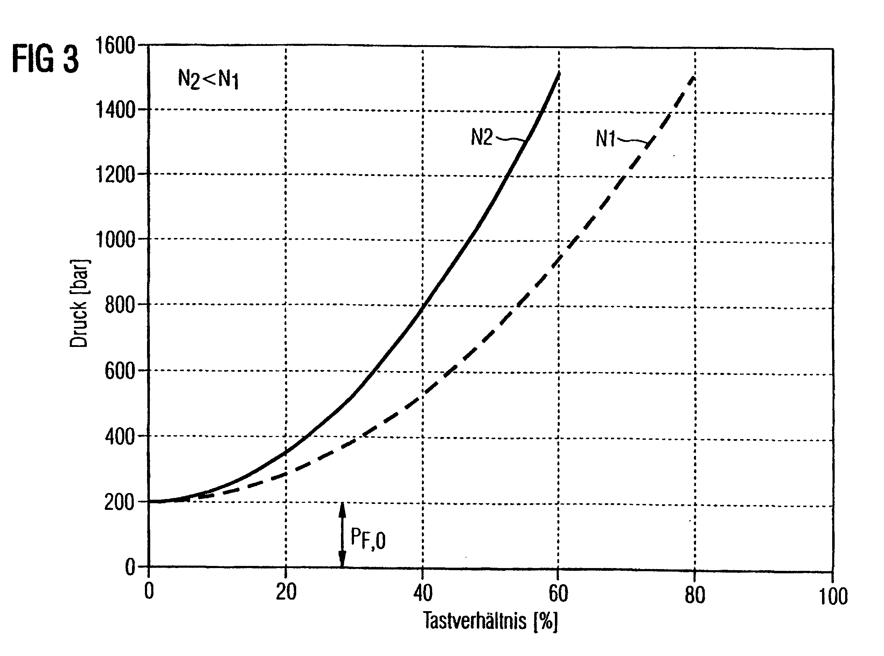

Figur 3 zeigt Kennlinien des Haltedrucks eines Druckregelventils, wie es in Figur 2 dargestellt ist, aufgetragen gegen ein Tastverhältnis des pulsweiten-modulierten Ansteuersignals des Druckregelventils für zwei unterschiedliche Drehzahlen N₁ und N₂ der Brennkraftmaschine. Das Tastverhältnis gibt das Verhältnis von Impulsdauer, d.h. der Zeit, bei der die Spule 167 mit Strom versorgt wird, zur Periodendauer, also den Abstand zwischen den Stromimpulsen wieder. Bei der in Figur 3 gezeigten Darstellung wird angenommen, daß die Feder 166 den Ventilkörper 163 mit der Federvorspannung p_{F'0} in der Ruhestellung bei geschlossenem Druckventil beaufschlagt. Figur 3 zeigt, so daß mit zunehmender Drehzahl N der Brennkraftmaschine die Ventilkennlinie flacher wird, daß zum Erreichen des gleichen Haltedrucks auf den Ventilkörper 163 ein niedrigeres Tastverhältnis bei der Ventilansteuerung, also kürzere Stromimpulse für die Spule 167 aufgewendet werden müssen. Dieser Effekt ist auf die Wegabhängigkeit der Federkraft zurückzuführen, mit der die Feder 166 den Ventilkörper 163 beaufschlagt. Wenn nämlich die Drehzahl der Brennkraftmaschine erhöht wird, wird über die Hochdruckpumpe 15 auch ein höherer Förderstrom in den Druckspeicher 17 eingespeist. Dieser erhöhte Förderstrom führt zu einer Druckerhöhung im Druckspeicher 17 und damit zu einer Erhöhung des Kraftstoffdrucks auf den Ventilkörper 163. Auf diesen erhöhten Kraftstoffdruck reagiert der Ventilkörper 163 dann durch Ausweichen entgegen seiner Schließrichtung, so daß sich der Strömungsquerschnitt durch die Einlaßöffnung 162 vergrößert und sich damit wieder ein Kräftegleichgewicht am Ventilkörper einstellt. Die Ausweichbewegung des Ventilkörpers 163 entgegen der Schließrichtung vergrößert jedoch gleichzeitig den Federweg der Feder 166 und damit die am Ventilkörper angreifende Federkraft. Um dennoch einen konstanten Haltedruck des Ventils zu erzielen, muß zur Aufrechterhaltung des Kräftegleichgewichts am Ventilkörper der Ankerstrom durch die Spule 167 und damit das Tastverhältnis des Ansteuersignals für die Spule reduziert werden.

Bei einem schadhaften Druckregelventil, bei dem beispielsweise die Schließstange 165, die den Ventilkörper führt, zum Klemmen neigt oder durch eine Beschädigung der Spule 167 bzw. des Ankers 165 keine gleichmäßige Ankerkraft erzeugt wird, ist der Regelmechanismus zur Einstellung des Strömungsquerschnitts im Druckregelventil, um Druckänderungen im Druckspeicher 17 auszugleichen, gestört. Da das schadhafte Druckregelventil nämlich Teil eines geschlossenen Regelkreislaufs ist, wird bei einer aufgrund einer verstärkten Kraftstoffzufuhr ausgelösten Druckerhöhung im Druckspeicher 17 und der daraus resultierenden Drucksteigerung auf den Ventilkörper 163 der Ankerstrom der Spule 167 durch die Steuereinheit 19 verringert, um den Druck im Druckspeicher 17 konstant halten zu können. Als Folge dieser zusätzlichen Verringerung des Ankerstroms und der damit einhergehenden Reduzierung der Ankerkraft kann jedoch das schadhafte Druckregelventil schlagartig freigebrochen werden und sich dadurch ein plötzlicher Druckeinbruch im Druckspeicher einstellen. Dieser Druckeinbruch dauert dann solange, bis der Ankerstrom durch die Spule 167 des Druckregelventils wieder auf seinen alten Wert eingeregelt ist. Stellt sich bei dieser Nachregelung jedoch ein erneutes Klemmen im Druckregelventil ein, so wird der oben beschriebene Vorgang wieder ausgelöst, wodurch starke Druckschwankungen im Druckspeicher 17 entstehen, die sich störend auf das Einspritzverhalten in die Brennkraftmaschine auswirken. So können z.B. erhöhte Schadstoffemissionen der Brennkraftmaschine aufgrund der sich dann einstellenden unzureichenden Verbrennung auftreten.

Um die Funktion eines Druckregelventils zu überwachen und im Druckregelventil auftretende Schäden rechtzeitig festzustellen, macht sich die vorliegende Erfindung den dargestellten Zusammenhang zwischen dem Kraftstoffförderstrom, mit dem der Druckspeicher versorgt wird, dem durch das Druckregelventil abgesteuerten Überschußkraftstoffstrom und dem Tastverhältnis des Ansteuersignals für die Spule im Druckregelventil zunutze. Bei Kraftstoffeinspritzsystemen kann der Förderstrom in den Druckspeicher im allgemeinen in weiten Betriebsbereichen drehzahlen-unabhängig eingestellt werden. Es besteht somit die Möglichkeit, die vom Druckregelventil durchgeführte druckabhängige Eigenregelung des Strömungsquerschnitts über eine gezielte Änderung des Kraftstoffförderung in den Druckspeicher anzuregen und somit das Druckregelventil auf seine Funktionsfähigkeit hin zu prüfen.

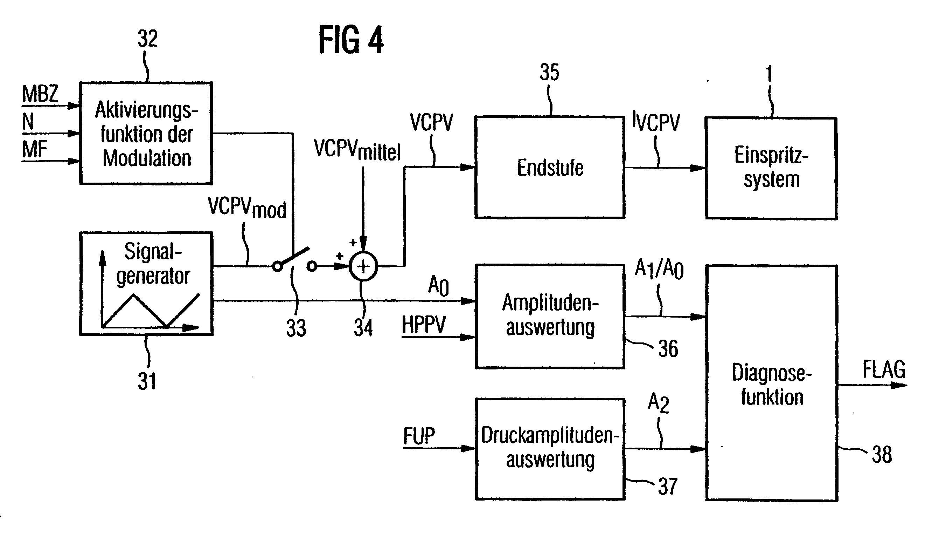

Figur 4 zeigt ein Ausführungsbeispiel einer erfindungsgemäßen Funktionsüberwachungsvorrichtung für einen Druckregler zum Regeln des Drucks in einem Kraftstoffeinspritzsystem. Diese dargestellte Überwachungsvorrichtung kann grundsätzlich auch in die in Figur 1 gezeigten Steuereinheit 19 integriert werden bzw. durch Implementieren eines speziellen Programmoduls in der Steuerungssoftware dieser Steuereinheit ausgeführt werden.

Die Überwachungsvorrichtung weist einen Signalgenerator 31 auf, der ein niederfrequentes Modulationssignal bereitstellt. Dieses Modulationssignal kann z.B. einen Dreieckverlauf, wie in Figur 4 gezeigt, aufweisen. Es sind jedoch beliebige periodische Signalformen, z.B. in Form einer Sinushalbschwingung oder eines Sägezahlverlaufes möglich. Die Frequenz des Modulationssignals kann beispielsweise 0,5 Hz betragen. Das mit VCPV_{mod} in Figur 4 gekennzeichnete Modulationssignal liegt an einem Addierer 34 an, der das Modulationssignal auf das Ansteuersignal VCPVₘᵢₜₜₑₗ zur Ansteuerung des Stellgliedes für den Förderstrom in den Druckspeicher aufprägt. Zwischen dem Addierer 34 und dem Signalgenerator 31 ist in der Signalleitung des Modulationssignals weiter ein Schalter 33 angeordnet, der von einer Aktivierungseinheit 32 angesteuert wird. Diese Aktivierungseinheit 32 schließt den Schalter 33 nur dann, wenn der Betriebszustand der Brennkraftmaschine für eine Funktionsdiagnose des Druckreglers geeignet ist. Als Daten für die Entscheidungsfindung werden an die Aktivierungseinheit 32 die augenblicklich eingespritzte Kraftstoffmenge MF, die augenblickliche Drehzahl N der Brennkraftmaschine sowie eine kodierte Aussage über den augenblicklichen Betriebszustand MBZ, d.h. ob die Brennkraftmaschine sich im Leerlauf-, Teillast-, Vorlast- oder Schubbetrieb etc. befindet, angelegt. Durch die Überwachung der Absolutwerte und der zeitlichen Änderung dieser angelegten Daten kann die Aktivierungseinheit 32 entscheiden, ob der aktuelle Betriebszustand der Brennkraftmaschine als genügend stationär angesehen werden kann, um eine Funktionsdiagnose des Druckreglers durchzuführen. Nur in diesem Fall schließt die Aktivierungseinheit 32 den Schalter 33 und das Modulationssignal VCPV_{mod} liegt am Addierer 34 an. Das Ansteuersignal für das Förderstromstellglied zum Druckspeicher, auf das der Addierer das Modulationssignal VCPV_{mod} aufprägt, wird der Endstufe 35 zugeführt, die daraus einen Stellstrom I_{VPCV} für das Förderstromstellglied des Einspritzsystems 1 erzeugt.

Die in Figur 4 gezeigte Funktionsüberwachungseinrichtung weist weiterhin eine Amplitudenauswerteeinheit 36 auf, an der die Amplitude A₀ des vom Signalgenerator 31 bereits gestellten Modulationssignals anliegt. Weiterhin wird in diese Amplitudenauswerteeinheit 36 das augenblickliche Tastverhaltnis HPPV des pulsweiten-modulierten Ansteuersignals des Druckreglers, mit dem der Druck im Druckspeicher im Einspritzsystem 1 eingestellt wird, eingelesen. Die Amplitudenauswerteeinheit 36 bestimmt durch Minimum/Maximum-Auswertung des Tastverhältnisses HPPV über eine Modulationsperiode die Amplitude A₁ und setzt diese ins Verhältnis zur Amplitude A₀ des Modulationssignals. Das resultierende Amplitudenverhältnis A₁/A₀ wird von der Amplitudenauswerteeinheit 36 an eine Diagnoseeinheit 38 angelegt.

Die in Figur 4 gezeigte Überwachungseinheit weist zusätzlich noch eine Druckamplitudenauswerteeinheit 37 auf, der die im Druckspeicher des Einspritzsystems 1 gemessenen Druckwerte zugeführt werden. In dieser Druckamplitudenauswerteeinheit 37 werden analog zur Amplitudenauswerteeinheit 36 Minimum und Maximum des Drucks im Druckspeicher über eine Modulationsperiode hinweg bestimmt und die Amplitude A₂ aus der Differenz von Maximum zu Minimum berechnet.

Die Diagnoseeinheit 38 überprüft, ob das Amplitudenverhältnis A₁/A₀ sowie die Druckschwingungsamplitude A₂ innerhalb vorgegebener Wertebereiche liegen, die anzeigen, daß der Druckregler fehlerfrei arbeitet. Stellt die Diagnoseeinheit 38 jedoch fest, daß eine der beiden Kenngrößen oder beide Kenngrößen außerhalb der jeweils vorgegebenen Wertebereiche liegen, so erzeugt die Diagnoseeinheit 38 ein Fehlersignalflag, das der Steuereinheit des Einspritzsystems 1 anzeigt, daß ein Schaden im Druckregler des Druckspeichers aufgetreten ist. Die Steuereinheit kann dann daraufhin eine Notlauffunktion der Brennkraftmaschine aktivieren, durch die der Druck im Druckspeicher abgesenkt und begrenzt wird, um so für eine Entlastung des Druckreglers zu sorgen. Die Steuereinheit kann darüber hinaus zusätzlich auch dem Fahrer anzeigen, daß er eine Werkstatt aufsuchen soll.

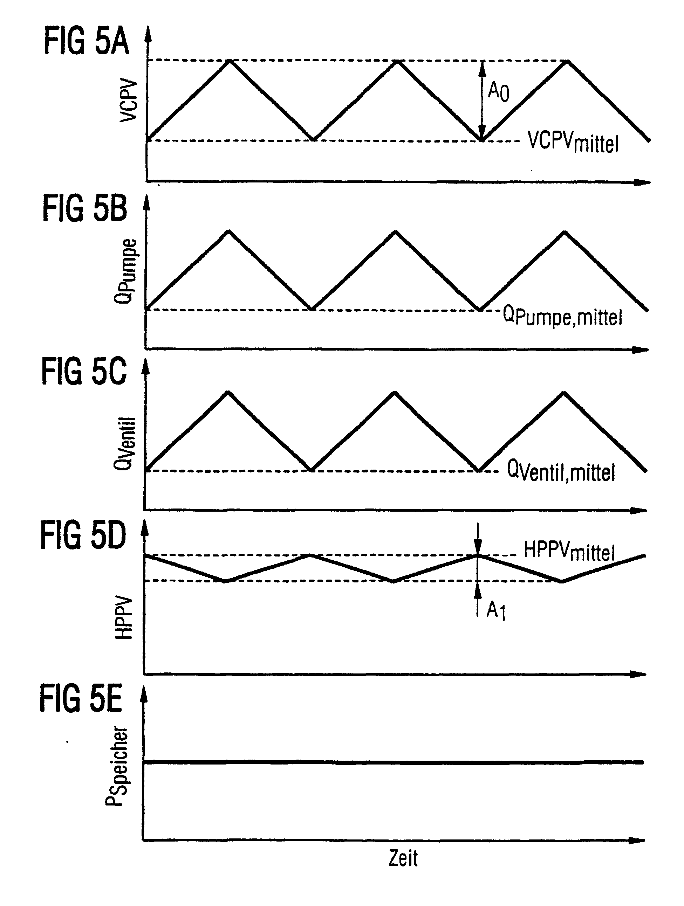

Figur 5 zeigt schematisch die Signalverläufe, die sich bei der Funktionsüberwachungseinheit gemäß Figur 4 ergeben, für den Fall, daß der Druckregler einwandfrei arbeitet. Figur 4a zeigt das Ansteuersignal des Stellgliedes für den Förderstrom in den Druckspeicher - hier beispielhaft ein elektromagnetisches Drosselventil für eine sauggedrosselte Hochdruckpumpe - die den Druckspeicher mit Kraftstoff versorgt. Dem von der Steuereinheit des Einspritzsystems zur Ansteuerung des Drosselventils berechneten Tastverhältnis VCPVₘᵢₜₜₑₗ wird vom Addierer 34 ein dreieckförmiges periodisches Modulationssignal mit niedriger Frequenz aufgeprägt, wenn der Aktivierungseinheit 32 einen stationären Betriebszustand der Brennkraftmaschine festgestellt hat. Die Amplitude A₀ dieses Modulationssignals wird dabei abhängig von der Geometrie des zu überwachenden Druckreglers so gewählt, daß bei einem einwandfrei arbeitenden Druckregler eine signifikante Bewegung des Ventilkörpers festzustellen ist.

Durch die Modulation des Ansteuersignals für das Drosselventil der Hochdruckpumpe wird dieser Hochdruckpumpe, wie in Figur 4b gezeigt, ein Pumpenförderstrom Q_{Pumpe} mit der Signalform des Modulationssignals aufgeprägt. Wenn die Modulation in einem stationären Betriebszustand der Brennkraftmaschine erfolgt, ist der dem Förderstrom aufgeprägte Verlauf auch bei dem über den Druckregler aus dem Druckspeicher abgesteuerten Kraftstoffstrom Q_{Ventil} zu finden, wie in Figur 4c gezeigt ist. Um diesen gewünschten Verlauf des vom Druckregler abgesteuerten Kraftstoffs zu erreichen, ist, wie im Zusammenhang mit Figur 3 erläutert ist, eine Veränderung des Tastverhältnisses im Ansteuerstrom des Druckreglers mit der in Figur 4d gezeigten Signalform notwendig, um einen konstanten Druck im Druckspeicher, wie er in Figur 4e dargestellt ist, zu erhalten. Dieses Nachregeln des Tastverhältnisses läßt sich aufgrund der nur niederfrequenten Anregung grundsätzlich sehr einfach ausführen.

Bei einem einwandfrei arbeitenden Druckregler ist das von der Funktionsüberwachungseinheit aufgenommene Tastverhältnis im Ansteuersignal des Druckreglers mit einer geringen Phasenverschiebung gegenphasig zum Tastverhältnis des Ansteuersignals des Förderstromstellglieds. Das Verhältnis der Amplituden des Modulationssignals A₀ für das Förderstromstellglied und die sich daraus ergebende Amplitude A₁ im Tastverhältnis des Ansteuersignals des Druckreglers bleibt bei einem fehlerfrei funktionierenden Druckregler konstant und die von der Druckamplitudenauswerteinheit 37 aufgezeichnete Amplitude A₂ ist im wesentlichen 0.

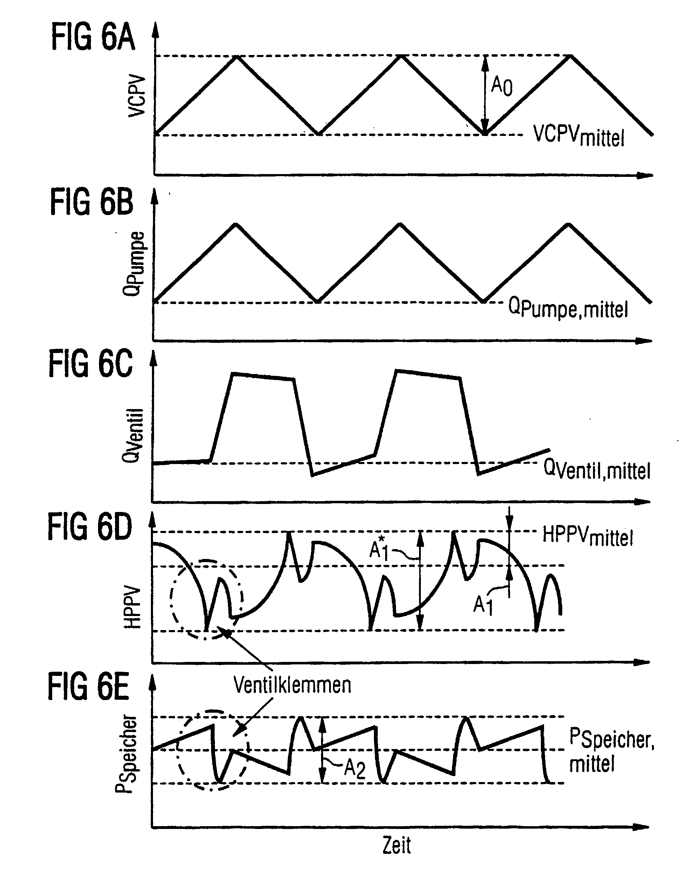

Figur 6 zeigt analog zu Figur 5 den Signalverlauf für einen schadhaften Druckregler, bei dem der Ventilkörper bzw. die Schließstange am Ventilkörper klemmt. Figur 6c zeigt, daß der über den Druckregler abgeführte Kraftstoffstrom Q_{Ventil} sich in seinem Verlauf von der Modulationskurve des Förderstroms der Hochdruckpumpe Q_{Pumpe} unterscheidet. Weiterhin ist Figur 6d zu entnehmen, daß das Tastverhältnis im Ansteuersignal des Druckreglers ebenfalls deutlich in seinem Verlauf von der Kennlinie des Förderstroms abweicht, wobei sich eine zur Normalamplitude A₁, die sich aus der Förderstrommodulation im Tastverhältnis ergibt, erhöhte Amplitude A*₁, die beim schlagartigen Freibrechen des schadhaften Druckreglers auftritt, einstellt.

Aufgrund der mangelnden Eigenregelung des schadhaften Druckreglers ergeben sich dann auch Schwingungen im im Druckspeicher herrschenden Druck, die in Figur 6e dargestellt sind, wobei die Amplitude A₂ den Druckeinbruch bei dem schlagartigen Freibrechen des Druckreglers wiedergibt.

Gemäß der Erfindung kann also durch eine einfache Überwachung der Amplituden von Modulationssignal und Tastverhältnis des Druckreglers sowie des Gradienten im Speicherdruck während der Modulationsphasen des Förderstroms die Fähigkeit des Druckreglers überprüft werden, eigenständig Druckänderungen im Druckspeicher nachzuregeln. Es kann so ein Bauteilversagen des Druckreglers, das sich in einer Verschlechterung der Nachregeleigenschaften manifestiert, schon in seiner Frühphase erkannt werden, so daß z.B. durch die Aktivierung einer Notlauffunktion der eingeschränkte Betrieb des Druckreglers aufrechterhalten und ein vollständiges Versagen vermieden wird.

## Patentansprüche

1. Verfahren zur Funktionsüberwachung eines Druckreglers, der den Druck in einem Druckspeicher regelt, mit den Verfahrensschritten:
Modulieren des in dem Druckspeicher eingespeisten Förderstroms mit einem vorgegebenen Muster;
Abtasten der Stellgröße des Druckreglers, mit der der durch den modulierten Förderstrom beeinflußte Druck im Druckspeicher auf einem vorgegebenen Sollwert gehalten wird; und
Korrelieren der Abtastwerte der Stellgröße des Druckreglers mit dem vorgegebenen Muster, mit dem der Förderstrom moduliert wird, um einen Funktionsfehler des Druckreglers festzustellen.

2. Verfahren gemäß Anspruch 1, wobei das vorgegebene Muster, mit dem der in den Druckspeicher eingespeiste Förderstrom moduliert wird, eine niederfrequente Periode mit einer Amplitude aufweist.

3. Verfahren gemäß Anspruch 2, wobei die Amplitude des vorgegebenen Musters, mit dem der in den Druckspeicher eingespeiste Förderstrom moduliert wird, mit der resultierenden Amplitude der Stellgröße des Druckreglers in einer Modulationsperiode korreliert wird, das sich ergebende Amplitudenverhältnis mit einem vorgegebenen Vergleichswert abgeglichen wird und bei einer Abweichung über einem vorbestimmten Wert hinaus ein Funktionsfehler des Druckreglers diagnostiziert wird.

4. Verfahren gemäß einem der Ansprüche 1 bis 3, wobei zusätzlich der Druck im Druckspeicher während der Modulation des in den Druckspeicher eingespeisten Förderstroms abgetastet und mit einem vorgegebenen Sollwert verglichen wird, um bei einer Abweichung über einem vorbestimmten Wert hinaus einen Funktionsfehler des Druckreglers zu diagnostizieren.

5. Verfahren gemäß einem der Ansprüche 1 bis 4 zum Einsatz in einer Brennkraftmaschine, wobei das Modulieren des in den Druckspeicher eingespeisten Kraftstoffstroms nur ausgeführt wird, wenn die Brennkraftmaschine sich in einem stationären Betriebszustand befindet.

6. Verfahren gemäß Anspruch 5, wobei eine Notlauffunktion in der Brennkraftmaschine aktiviert wird, bei der eine Belastung des Druckreglers durch Begrenzen des Drucks im Druckspeicher minimiert wird, wenn ein Funktionsfehler des Druckspeichers diagnostiziert ist.

7. Vorrichtung zur Funktionsüberwachung eines Druckreglers (16), der den Druck in einem Druckspeicher (17) regelt, mit
einer Modulationseinrichtung (31, 32, 33, 34) zum Modulieren des in den Druckspeicher eingespeisten Förderstroms mit einem vorgegebenen Muster;
einer Erfassungseinrichtung zum Abtasten der Stellgröße des Druckreglers, mit der der durch den modulierten Förderstrom beeinflußte Druck im Druckspeicher auf einem vorgegebenen Sollwert gehalten wird; und
einer Auswerteeinrichtung (36, 37, 38) zum Korrelieren der Abtastwerte der Stellgröße des Druckreglers mit dem vorgegebenen Muster, mit dem der Förderstrom moduliert wird, um einen Funktionsfehler des Druckreglers festzustellen.

8. Vorrichtung gemäß Anspruch 7, wobei das vorgegebene Muster, mit dem die Modulationseinrichtung den in den Druckspeicher eingespeisten Förderstrom moduliert, eine niederfrequente Periode mit einer Amplitude aufweist und die Auswerteeinrichtung eine Amplitudenauswerteeinrichtung (36) und eine Diagnoseeinrichtung (38) aufweist, wobei an der Amplitudenauswerteeinrichtung die Amplitude des vorgegebenen Musters und die Abtastwerte der Stellgröße des Druckspeichers anliegen und die Amplitudenauswerteeinrichtung eine maximale Differenz zwischen den Abtastwerten in einer Modulationsperiode berechnet und einen Verhältniswert zwischen der berechneten Differenz der Stellgröße und der Amplitude des Musters bildet und wobei die Diagnoseeinrichtung den von der Auswerteeinrichtung gebildeten Verhältniswert mit einem vorgegebenen Vergleichswert abgleicht und bei einer Abweichung über einen vorbestimmten Wert hinaus einen Funktionsfehler des Druckreglers diagnostiziert.

9. Vorrichtung gemäß Anspruch 7 oder 8, wobei die Auswerteeinrichtung weiter eine Druckamplitudenauswerteeinrichtung (37) aufweist, an der der im Druckspeicher während der Modulation des in den Druckspeicher eingespeisten Förderstroms gemessene Druck anliegt und eine maximale Änderung des Drukkes während einer Modulationsperiode berechnet wird, wobei die Diagnoseeinrichtung (38) die berechnete Druckänderung mit einem vorgegebenen Wertebereich vergleicht und bei einer Abweichung einen Funktionsfehler im Druckregler diagnostiziert.

10. Vorrichtung gemäß einem der Ansprüche 7 bis 9 zum Einsatz in einem Einspritzsystem für eine Brennkraftmaschine, wobei die Modulationseinrichtung eine Aktivierungseinrichtung (32) aufweist, die den Betriebszustand der Brennkraftmaschine überwacht und entscheidet, ob der Betriebszustand der Brennkraftmaschine ausreichend stationär ist, um das Modulieren des Kraftstoffstroms auszuführen.

11. Vorrichtung gemäß Anspruch 10, wobei an der Aktivierungseinrichtung (32) als Eingangsinformationen eine gegenwärtig eingespritzte Kraftstoffmenge, eine augenblickliche Drehzahl der Brennkraftmaschine und eine kodierte Aussage über einen eingestellten Betriebszustand der Brennkraftmaschine anliegen und die Aktivierungseinrichtung auf der Grundlage dieser Eingangsinformationen und ihrer zeitlichen Änderungen entscheidet, ob der Betriebszustand der Brennkraftmaschine ausreichend stationär ist, um ein Modulieren des Kraftstoffstroms auszuführen.

12. Vorrichtung gemäß einem der Ansprüche 7 bis 11, wobei die Modulationseinrichtung einen Signalgenerator (31) zum Erzeugen eines Modulationssignals und einen Addierer (34) zum Addieren des Modulationssignals zum Ansteuern eines Förderstromstellgliedes (14) aufweist.

## Claims

1. Method for monitoring the operation of a pressure regulator which controls the pressure in a pressure reservoir, having the following method steps:
modulating the delivery flow fed into the pressure reservoir with a predefined pattern;
sensing the correcting variable for the pressure regulator, with which the pressure influenced by the modulated delivery flow is kept at a predefined required value in the pressure reservoir; and
correlating the sensed values for the correcting variable for the pressure regulator with the predefined pattern, with which the delivery flow is modulated in order to detect a functional fault in the pressure regulator.

2. Method according to Claim 1, whereby the predefined pattern with which the delivery flow is fed into the pressure reservoir is modulated exhibits a low-frequency period with one amplitude.

3. Method according to Claim 2, whereby the amplitude of the predefined pattern with which the delivery flow fed into the pressure reservoir is modulated is correlated with the resulting amplitude of the correcting variable for the pressure regulator in a modulation period, the resulting amplitude ratio is compared with a comparison value and in the event of a deviation exceeding a predetermined value a functional fault is diagnosed in the pressure regulator.

4. Method according to one of Claims 1 to 3, whereby the pressure in the pressure reservoir is additionally sensed during the modulation of the delivery flow fed into the pressure reservoir and compared with a predefined required value in order in the event of a deviation exceeding a predetermined value to diagnose a functional fault in the pressure regulator.

5. Method according to one of Claims 1 to 4 for use in an internal combustion engine, whereby the modulation of the fuel flow fed into the pressure reservoir is only performed if the internal combustion engine is in a stationary operating state.

6. Method according to Claim 5, whereby an emergency operation function is activated in the internal combustion engine, in which the load on the pressure regulator is minimised by limiting the pressure in the pressure reservoir when a functional fault is diagnosed in the pressure regulator.

7. Device for functional monitoring of a pressure regulator (16) which controls the pressure in a pressure reservoir (17), with
a modulation facility (31, 32, 33, 34) for modulating the delivery flow fed into the pressure reservoir with a predefined pattern;
a sensing device for sensing the correcting variable for the pressure regulator, with which the pressure influenced by the modulated delivery flow is kept at a predefined required value in the pressure reservoir; and
an evaluation facility (36, 37, 38) for correlating the sensed values for the correcting variable for the pressure regulator with the predefined pattern, with which the delivery flow is modulated in order to detect a functional fault in the pressure regulator.

8. Device according to Claim 7, whereby the predefined pattern with which the modulation facility modulates the delivery flow is fed into the pressure reservoir exhibits a low-frequency period with one amplitude and the evaluation facility has an amplitude evaluation facility (36) and a diagnostic facility (38), whereby the amplitude of the predefined pattern and the sensed values for the correcting variable for the pressure reservoir are applied to the amplitude evaluation device and the amplitude evaluation device calculates a maximum difference between the sensed values in a modulation period and forms a ratio value between the calculated difference for the correcting variable and the amplitude of the pattern, and whereby the diagnostic facility compares the ratio value formed by the evaluation facility with a predefined comparison value and in the event of a deviation exceeding a predetermined value diagnoses a functional fault in the pressure regulator.

9. Device according to Claim 7 or 8, whereby the evaluation facility additionally has a pressure amplitude evaluation facility (37) to which the pressure measured in the pressure reservoir during modulation of the delivery flow fed into the pressure reservoir is applied, and a maximum change in the pressure during a modulation period is calculated, whereby the diagnostic facility (38) compares the calculated change in pressure with a predefined value range and in the event of a deviation diagnoses a functional fault in the pressure regulator.

10. Device according to one of Claims 7 to 9 for use in an injection system for an internal combustion engine, whereby the modulation facility has an activation facility (32) which monitors the operating state of the internal combustion engine and decides whether the operating state of the internal combustion engine is sufficiently stationary in order to perform the modulation of the fuel flow.

11. Device according to Claim 10, whereby a fuel quantity currently being injected, a current rotational speed of the internal combustion engine and a coded message about an operating state set for the internal combustion engine are applied as input information to the activation facility (32), and the activation facility decides on the basis of this input information and their time-related changes whether the operating state of the internal combustion engine is sufficiently stationary in order to perform a modulation of the fuel flow.

12. Device according to one of Claims 7 to 11, whereby the modulation facility has a signal generator (31) for generating a modulation signal and a summing element (34) for summing the modulation signal in order to control a delivery flow final control element (14).

## Revendications

1. Procédé pour la surveillance du fonctionnement d'un régulateur de pression qui règle la pression dans un accumulateur de pression, possédant les étapes de procédé suivantes :
moduler le débit de refoulement introduit dans l'accumulateur de pression avec un motif prédéterminé ;
lire la grandeur réglante du régulateur de pression avec laquelle la pression dans l'accumulateur de pression, qui est influencée par le débit de refoulement modulé, est maintenue à une valeur de consigne prédéterminée ; et
déterminer la relation entre les valeurs lues de la grandeur réglante du régulateur de pression et le motif prédéterminé avec lequel le débit de refoulement est modulé, pour détecter un défaut de fonctionnement du régulateur de pression.

2. Procédé selon la revendication 1 dans lequel le motif prédéterminé avec lequel le débit de refoulement introduit dans l'accumulateur de pression est modulé présente une période de basse fréquence possédant une amplitude.

3. Procédé selon la revendication 2 dans lequel on établit la relation entre l'amplitude du motif prédéterminé avec lequel le débit de refoulement introduit dans l'accumulateur de pression est modulé et l'amplitude résultante de la grandeur réglante du régulateur de pression dans une période de modulation, on compare le rapport d'amplitude résultant à une valeur de comparaison prédéterminée et, dans le cas d'un écart supérieur à une valeur prédéterminée, on diagnostique un défaut de fonctionnement du régulateur de pression.

4. Procédé selon une des revendications 1 à 3 dans lequel en supplément, on lit la pression dans l'accumulateur de pression pendant la modulation du débit de refoulement introduit dans l'accumulateur de pression et on la compare à une valeur de consigne prédéterminée, pour diagnostiquer un défaut de fonctionnement du régulateur de pression dans le cas d'un écart supérieur à une valeur prédéterminée.

5. Procédé selon l'une des revendications 1 à 4 destiné à être appliqué dans un moteur à combustion interne dans lequel la modulation du débit de carburant introduit dans l'accumulateur de pression n'est exécutée que si le moteur à combustion interne se trouve dans un état de fonctionnement stationnaire.

6. Procédé selon la revendication 5 dans lequel une fonction de marche dégradée est activée dans le moteur à combustion interne, fonction dans laquelle une sollicitation du régulateur de pression par limitation de la pression dans l'accumulateur de pression est réduite à un minimum lorsqu'un défaut de fonctionnement de l'accumulateur de pression est diagnostiqué.

7. Dispositif de surveillance de fonctionnement d'un régulateur de pression (16) qui règle la pression dans un accumulateur de pression (17), comprenant
un dispositif de modulation (31, 32, 33, 34) destiné à moduler le débit de refoulement introduit dans l'accumulateur de pression avec un motif prédéterminé ;
un dispositif de détection destiné à lire la grandeur réglante du régulateur de pression, avec laquelle la pression dans l'accumulateur de pression qui est influencée par le débit modulé est maintenue à une valeur de consigne prédéterminée ; et
un dispositif d'analyse (36, 37, 38) destiné à établir la relation entre les valeurs lues de la grandeur réglante du régulateur de pression et le motif prédéterminé avec lequel le débit de refoulement est modulé, pour détecter un défaut de fonctionnement du régulateur de pression.

8. Dispositif selon la revendication 7, dans lequel le motif prédéterminé avec lequel le dispositif de modulation module le débit de refoulement introduit dans l'accumulateur de pression présente une période de basse fréquence possédant une amplitude et le dispositif d'analyse présente un dispositif d'analyse de l'amplitude (36) et un dispositif de diagnostic (38), le dispositif d'analyse de l'amplitude recevant l'amplitude du motif prédéterminé et les valeurs lues de la valeur réglante de l'accumulateur de pression et le dispositif d'analyse de l'amplitude calcule une différence maximale entre les valeurs lues dans une période de modulation et forme une valeur de rapport entre la différence calculée de la grandeur réglante et l'amplitude du motif, et dans lequel le dispositif de diagnostic compare la valeur de rapport formée par le dispositif d'analyse à une valeur de comparaison prédéterminée et, en présence d'un écart dépassant une valeur prédéterminée, diagnostique un défaut de fonctionnement du régulateur de pression.

9. Dispositif selon la revendication 7 ou 8, dans lequel le dispositif d'analyse présente en outre un dispositif d'analyse de l'amplitude de la pression (37) auquel la pression mesurée dans l'accumulateur de pression est appliquée pendant la modulation du débit de refoulement introduit dans l'accumulateur de pression et une variation maximale de la pression pendant un période de modulation est calculée, le dispositif de diagnostic (38) comparant la variation de pression calculée à une plage de valeurs prédéterminées et diagnostiquant un défaut de fonctionnement dans le régulateur de pression en présence d'un écart.

10. Dispositif selon l'une des revendications 7 à 9, destiné à être utilisé dans un système d'injection pour un moteur à combustion interne, le dispositif de modulation comprenant un dispositif d'activation (32) qui surveille l'état de fonctionnement du moteur à combustion interne et décide si l'état de fonctionnement du moteur à combustion interne est suffisamment stationnaire pour exécuter la modulation du débit de carburant.

11. Dispositif selon la revendication 10, dans lequel le dispositif d'activation (32) reçoit, comme informations d'entrée, une quantité de carburant injectée au moment considéré, une vitesse de rotation instantanée du moteur à combustion interne et une indication codée sur un état de fonctionnement réglé du moteur à combustion interne et le dispositif d'activation décide sur la base de ces informations d'entrée et de leurs variations dans le temps si l'état de fonctionnement du moteur à combustion interne est suffisamment stationnaire pour exécuter une modulation du débit de carburant.

12. Dispositif selon l'une des revendications 7 à 11, dans lequel le dispositif de modulation comprend un générateur de signaux (31) destiné à produire un signal de modulation et un additionneur (34) destiné à ajouter le signal de modulation pour piloter un organe de réglage du débit (14).
